# EUROPÄISCHE PATENTSCHRIFT

(11) **EP 2 426 388 B1**
(45) Veröffentlichungstag und Bekanntmachung des Hinweises auf die Patenterteilung: **28.11.2012**
(21) Anmeldenummer: 11006860.8
(22) Anmeldetag: 23.08.2011
(51) Int. Cl.: F16K 31/42

(54) **Vorgesteuertes Mehrwegeventil**
Pilot operated multiple way valve
Soupape à plusieurs voies précommandée

(30) Priorität: 07.09.2010 DE 102010044632
(43) Veröffentlichungstag der Anmeldung: 07.03.2012
(73) Patentinhaber: Festo AG & Co. KG, 73734 Esslingen (DE)
(72) Erfinder: Brenner, Jakob, 73730 Esslingen (DE)
(74) Vertreter: Abel, Martin

(56) Entgegenhaltungen:
- EP-A1- 1 760 376
- EP-A2- 1 519 054
- DE-A1- 10 010 690
- DE-B4-102004 046 976

## Beschreibung

Die Erfindung betrifft ein vorgesteuertes Mehrwegeventil, mit einem in einem Ventilgehäuse zwischen einer ersten Schaltstellung und einer zweiten Schaltstellung linear bewegbar angeordneten Hauptventilglied, das einander entgegengesetzt orientierte erste und zweite Antriebsflächen aufweist, von denen die erste Antriebsfläche einen zum Umschalten des Hauptventilgliedes in die zweite Schaltstellung fluidisch beaufschlagbaren ersten Antriebsraum und die zweite Antriebsfläche einen zum Umschalten des Hauptventilgliedes in die erste Schaltstellung fluidisch beaufschlagbaren zweiten Antriebsraum begrenzt, und mit einem Vorsteuerventil zur alternativen Fluidbeaufschlagung oder Druckentlastung des ersten Antriebsraumes.

Ein aus der DE 100 10 690 A1 bekanntes Mehrwegeventil dieser Art enthält ein als Ventilschieber ausgebildetes Hauptventilglied, das eine einen ersten Antriebsraum begrenzende erste Antriebsfläche und eine einen zweiten Antriebsraum begrenzende zweite Antriebsfläche aufweist. Die beiden Antriebsflächen sind einander entgegengesetzt orientiert, wobei die zweite Antriebsfläche kleiner ist als die erste Antriebsfläche. Der zweite Antriebsraum fungiert als Luftfeder, indem er ständig durch ein fluidisches Druckmedium beaufschlagt ist und dadurch das Ventilglied in Richtung einer ersten Schaltstellung vorgespannt ist. Zum Umschalten in die zweite Schaltstellung kann der erste Antriebsraum durch ein elektrisch betätigbares Vorsteuerventil mit fluidischem Druckmedium beaufschlagt werden, wobei das Hauptventilglied auf Grund der Flächendifferenz der beiden Antriebsflächen eine in die zweite Schaltstellung orientierte Umschaltkraft erfährt. Es liegt somit ein monostabiles Mehrwegeventil vor, bei dem die Schaltstellung des Hauptventilgliedes mittels eines einzigen Vorsteuerventils vorgegeben werden kann.

Ein nach den gleichen Prinzipien arbeitendes Mehrwegeventil ist auch aus der DE 10 2004 046 976 B4 bekannt.

Bei derartigen Mehrwegeventilen wird der sich aus der Verwendung eines einzigen Vorsteuerventils ergebende Vorteil eines kostengünstigen Aufbaus durch Nachteile in der Umschaltgeschwindigkeit erkauft. Das Umschalten in die zweite Schaltstellung ist dadurch verlangsamt, dass die auf die zweite Antriebsfläche einwirkende fluidische Gegenkraft überwunden werden muss. Die Umschaltgeschwindigkeit in der Gegenrichtung ist herabgesetzt, weil die vom Druckmedium beaufschlagbare zweite Antriebsfläche kleiner zu sein hat als die erste Antriebsfläche.

Höhere Umschaltgeschwindigkeiten wären realisierbar, wenn man beide Antriebsflächen gleich groß ausbilden und beide Antriebsräume individuell mit je einem eigenen Vorsteuerventil ansteuern würde. Damit wäre jedoch ein erhöhter Aufwand in sowohl konstruktiver als auch steuerungstechnischer Hinsicht verbunden.

Es ist daher die Aufgabe der vorliegenden Erfindung, trotz Verwendung lediglich eines einzigen Vorsteuerventils die Umschaltzeiten bei beiden Umschaltrichtungen herabzusetzen.

Zur Lösung dieser Aufgabe ist vorgesehen, dass der erste Antriebsraum mit dem zweiten Antriebsraum über ein in Richtung des zweiten Antriebsraumes druckabhängig öffnendes und in der Gegenrichtung sperrendes Rückschlagventil verbunden ist, und dass das Mehrwegeventil ein durch das Hauptventilglied in Abhängigkeit von dessen Position betätigbares Druckentlastungsventil aufweist, das in der zweiten Schaltstellung des Hauptventilgliedes den zweiten Antriebsraum von einem Druckentlastungskanal absperrt und das eine Fluidverbindung zwischen dem zweiten Antriebsraum und dem Druckentlastungskanal freigibt, wenn das Hauptventilglied aus der zweiten Schaltstellung in die erste Schaltstellung umschaltet und/oder die erste Schaltstellung einnimmt.

Auf diese Weise erfolgt das Umschalten des Hauptventilgliedes in die zweite Schaltstellung gegen einen druckmäßig entlasteten und insbesondere drucklosen zweiten Antriebsraum. Das Druckentlastungsventil bewirkt, dass der zweite Antriebsraum durch Verbindung mit einem Druckentlastungskanal entlüftet wird, wenn sich das Hauptventilglied aus der zweiten Schaltstellung in die erste Schaltstellung bewegt und/oder in die erste Schaltstellung umgeschaltet ist. Der die erste Antriebsfläche beaufschlagende Betätigungsdruck hat somit im Idealfall zum Umschalten des Hauptventilglieds lediglich die an dem Hauptventilglied angreifenden Reibungskräfte zu überwinden. Hat das Hauptventilglied die zweite Schaltstellung erreicht, kann durch das druckabhängig öffnende Rückschlagventil hindurch Druckmedium aus dem ersten Antriebsraum in den zweiten Antriebsraum überströmen und dort einen Gegendruck aufbauen. Indem die zweite Antriebsfläche maximal gleich groß ist wie die erste Antriebsfläche, führt dies zunächst zu keiner Schaltstellungsänderung, da auch die erste Antriebsfläche weiterhin von dem Druckmedium beaufschlagt ist. Mithin verbleibt das Hauptventilglied in der zweiten Schaltstellung so lange, wie durch das Vorsteuerventil eine Fluidbeaufschlagung des ersten Antriebsraumes hervorgerufen wird. Zum Umschalten in die erste Schaltstellung ist lediglich eine Druckentlastung des ersten Antriebsraumes durch entsprechende Ansteuerung des Vorsteuerventils nötig. In diesem Fall wird das Hauptventilglied durch das im zweiten Antriebsraum eingesperrte Druckmedium, das auf Grund des sperrenden Rückschlagventils nicht in den ersten Antriebsraum zurückströmen kann, in die erste Schaltstellung umgeschaltet. Bei diesem Umschalten und/oder wenn die erste Schaltstellung erreicht ist, wird der zweite Antriebsraum mittels des Druckentlastungsventils druckentlastet und das Hauptventil verharrt in der ersten Schaltstellung bis zur neuerlichen Fluidbeaufschlagung des ersten Antriebsraumes.

Da das Druckentlastungsventil durch das Hauptventilglied selbst betätigt wird, in Abhängigkeit von der Position des Hauptventilglieds, kann auf ein zweites elektrisch ansteuerbares Vorsteuerventil verzichtet werden. Es liegt quasi ein monostabiles Mehrwegeventil vor, das durch eine Luftfeder in die erste Schaltstellung umgeschaltet wird, wobei diese Luftfeder jedoch dynamisch gestaltet ist und in Abhängigkeit von der Position des Hauptventilgliedes aktiviert bzw. deaktiviert wird. Hinsichtlich des Rückschlagventils versteht sich vorzugsweise eine dahingehende Auslegung, dass es erst bei einem solchen Fluiddruck öffnet, der größer ist als der zum Verlagern des Hauptventilgliedes aus der ersten Schaltstellung in die zweite Schaltstellung erforderliche Fluiddruck. Dadurch kann gewährleistet werden, dass der Druckaufbau in dem ersten Antriebsraum nicht durch ein frühzeitiges Überströmen des Druckmediums in den zweiten Antriebsraum beeinträchtigt wird.

Vorteilhafte Weiterbildungen der Erfindung gehen aus den Unteransprüchen hervor.

Das Druckentlastungsventil ist vorzugsweise so ausgebildet, dass es schon während der Phase des Umschaltens zwischen der zweiten Schaltstellung in die erste Schaltstellung einen den zweiten Antriebsraum mit dem Druckentlastungskanal verbindenden Freigabezustand einnimmt und diesen dann bis zum Erreichen der ersten Schaltstellung beibehält. Auf diese Weise kann auch bei geringen Umschalt-Taktzeiten ein optimal schnelles Druckentlasten des zweiten Antriebsraumes gewährleistet werden. Trotz des frühzeitigen Druckentlastungsvorganges reicht die Energie des im zweiten Antriebsraum eingesperrten Druckmediums aus, um dem Hauptventilglied einen das vollständige Umschalten in die erste Schaltstellung hervorrufenden Umschaltimpuls aufzuerlegen.

Besonders zweckmäßig ist die Anwendung der Erfindung bei einem sogenannten Schieberventil, dessen Hauptventilglied als Ventilschieber ausgebildet ist, das einen länglichen und vorzugsweise einstückigen Schieberkörper aufweist, der über einen abgestuften Außenumfang mit in axialer Richtung abwechselnden Längenabschnitten größeren und kleineren Durchmessers verfügt.

Für das Druckentlastungsventil empfiehlt sich eine dahingehende Realisierung, dass es eine bezüglich dem Ventilgehäuse ortsfeste Dichtfläche aufweist sowie ein diesbezüglich durch das Hauptventilglied bewegbares Steuerglied. Das Steuerglied kann wahlweise in einer Sperrstellung und mindestens einer Freigabestellung positioniert werden, wobei es in der Sperrstellung dichtend an der Dichtfläche anliegt und in der Freigabestellung von der Dichtfläche abgehoben bzw. zu der Dichtfläche beabstandet ist, um einen den zweiten Antriebsraum mit dem Druckentlastungskanal verbindenden Überströmspalt freizugeben.

Bei der Dichtfläche handelt es sich insbesondere um eine nach radial innen orientierte Ringfläche. Das Steuerglied ist zweckmäßigerweise so ausgebildet, dass es durch die ringförmige Dichtung hindurchragt, und zwar vorzugsweise sowohl in der Schließstellung als auch in der mindestens einen Freigabestellung. Die ringförmige Dichtfläche ist zweckmäßigerweise ein einstückiger Bestandteil eines vorzugsweise aus Material mit gummielastischen Eigenschaften bestehenden Dichtungsringes, der ortsfest am Ventilgehäuse angeordnet ist.

Eine besonders vorteilhafte Ausführungsform der Erfindung sieht vor, dass das Steuerglied ein unmittelbarer Bestandteil des Hauptventilgliedes ist. Auf diese Weise erübrigt sich die Realisierung eines als Steuerglied fungierenden zusätzlichen Ventilgliedes. Das Hauptventilglied hat eine Doppelfunktion, indem es sowohl die fluidische Steuerfunktion in Bezug eines angeschlossenen Verbrauchers übernimmt als auch die Steuerfunktion für das Druckentlastungsventil. Auf diese Weise ist auch eine absolut zuverlässig unmittelbar von der Position des Hauptventilgliedes abhängige Betätigung des Druckentlastungsventils möglich. Man kann sagen, dass in diesem Fall das Steuerglied direkt vom Hauptventilglied betätigt wird.

Wenn es sich bei dem Ventilglied um einen Ventilschieber handelt, ist das Steuerglied des Entlastungsventils zweckmäßigerweise von einem Längenabschnitt eines Schieberkörpers des Ventilschiebers gebildet. Hierbei handelt es sich vorzugsweise um den dem zweiten Antriebsraum zugewandten Endabschnitt des Schieberkörpers. Dieser kann auch zumindest eine Teilfläche der zweiten Antriebsfläche aufweisen.

Das Steuerglied ist vorzugsweise so ausgebildet, dass es in der Absperrstellung radial von innen her an einer es umschließenden, bezüglich des Ventilgehäuses ortsfest angeordneten ringförmigen Dichtfläche anliegt. Ob das Steuerglied die Absperrstellung oder eine Freigabestellung einnimmt, hängt hierbei davon ab, welche momentane Axialposition das Steuerglied einnimmt. In diesem Zusammenhang hat das Steuerglied zweckmäßigerweise eine längliche Gestalt mit einer abgestuften Außenkontur, wobei ein axialer Längenabschnitt der Außenkontur einen einen größeren Durchmesser aufweisenden Absperrabschnitt und ein sich axial daran anschließender weiterer axialer Längenabschnitt der Außenkontur einen im Vergleich zum Absperrabschnitt einen kleineren Durchmesser aufweisenden Freigabeabschnitt bildet. Taucht der Absperrabschnitt in die ringförmige Dichtfläche ein, liegt er daran radial dichtend an. Dieser Zustand liegt in der zweiten Schaltstellung des Hauptventilgliedes vor. Im Zustand der Druckentlastung des zweiten Antriebsraumes ist das Steuerglied derart axial verlagert, dass der Absperrabschnitt außerhalb der Dichtfläche liegt und nurmehr der Freigabeabschnitt von der Dichtfläche umschlossen ist, wobei zwischen dem Außenumfang des Freigabeabschnittes und der Dichtfläche ein Ringspalt vorliegt, der als Überströmspalt zwischen dem zweiten Antriebsraum und dem Druckentlastungskanal fungiert. Besonders vorteilhaft ist es in diesem Zusammenhang, wenn der Absperrabschnitt und der Freigabeabschnitt ein unmittelbarer Bestandteil des Hauptventilgliedes sind und hierbei insbesondere von einem Bestandteil eines einstückigen Schieberkörpers des bevorzugt als Ventilschieber ausgebildeten Ventilgliedes gebildet sind.

Der Druckentlastungskanal kann ein eigenständiger, lediglich zur Druckentlastung des zweiten Antriebsraumes dienender Fluidkanal sein. Besonders zweckmäßig und kostensparend ist jedoch eine Bauform, bei der der Druckentlastungskanal von einem sowieso vorhandenen Fluidabführkanal des Mehrwegeventils gebildet ist, der vom Hauptventilglied in Abhängigkeit von seiner Schaltstellung abwechselnd mit einem zu einem Verbraucher führenden Arbeitskanal verbunden oder abgesperrt wird.

Das Rückschlagventil ist zweckmäßigerweise mit einem beweglichen Rückschlagventilglied ausgestattet, das federelastisch in eine Schließstellung vorgespannt ist, in der es zum Absperren der Verbindung zwischen den beiden Antriebsräumen an einer Dichtfläche dichtend anliegt. Diese Dichtfläche ist vorzugsweise ortsfest bezüglich dem Ventilgehäuse angeordnet. Die federnde Vorspannkraft, mit der das Rückschlagventilglied gegen die Dichtfläche vorgespannt ist, ist zweckmäßigerweise mindestens so groß wie die Fluidkraft, die im Öffnungssinne auf das Rückschlagventilglied einwirkt, wenn der erste Antriebsraum mit Druckmedium beaufschlagt wird, um das Umschalten aus der ersten Schaltstellung in die zweite Schaltstellung hervorzurufen. Dadurch ist gewährleistet, dass das Rückschlagventilglied während der Umschaltbewegung des Hauptventilgliedes noch geschlossen bleibt und erst öffnet, wenn der im ersten Antriebsraum herrschende Fluiddruck ansteigt, nachdem das Hauptventilglied die zweite Schaltstellung erreicht hat und durch eine gehäusefeste Anschlagfläche an einer Weiterbewegung gehindert wird.

Das Rückschlagventil kann prinzipiell völlig unabhängig vom Hauptventilglied realisiert sein. Es kann beispielsweise in das Ventilgehäuse des Mehrwegeventils integriert und durch Fluidkanäle, die das Ventilgehäuse durchsetzen, mit den beiden Antriebsräumen verbunden sein.

Als besonders vorteilhaft wird derzeit allerdings eine Bauform angesehen, bei der das Rückschlagventil zumindest teilweise ein Bestandteil des Hauptventilgliedes ist.

Vorzugsweise ist zumindest das Rückschlagventilglied ein Bestandteil des Hauptventilgliedes, so dass es dessen Umschaltbewegung mitmacht. Die mit dem Rückschlagventilglied kooperierende Dichtfläche des Rückschlagventils gehört dabei zweckmäßigerweise jedoch nicht zum Hauptventilglied, sondern ist ortsfest bezüglich des Ventilgehäuses angeordnet, so dass sich das Rückschlagventilglied bei der Umschaltbewegung des Hauptventilgliedes relativ zu der genannten Dichtfläche bewegt.

Um eine Leckage aus dem ersten Antriebsraum zu vermeiden, ist das Hauptventilglied zweckmäßigerweise mit einem Dichtungsring ausgestattet, der eine radial flexible Dichtlippe aufweist, die gleitverschieblich an einer gehäusefesten Dichtfläche anliegt. Es ist besonders vorteilhaft, wenn das Rückschlagventilglied unmittelbar von der Dichtlippe dieses Dichtungsringes gebildet ist, so dass auf den Einbau einer separaten, zusätzlichen Rückschlagventilgliedkomponente verzichtet werden kann. In der Absperrstellung liegt die Dichtlippe an der gehäusefesten Dichtfläche an und kann an dieser auch entlanggleiten, wenn das Hauptventilglied die Umschaltbewegung ausführt. Sobald der im ersten Antriebsraum herrschende Fluiddruck einen Schwellwert übersteigt, wird die Dichtlippe durch die auf sie einwirkende Fluidkraft verformt und nach radial innen von der Dichtfläche abgehoben, so dass ein Durchtrittsspalt freigegeben wird, der dem Druckmedium den Übertritt vom ersten Antriebsraum in den zweiten Antriebsraum gestattet. Der vorgenannte Schwellwert hat zweckmäßigerweise eine Höhe, die mindestens so hoch und vorzugsweise zumindest geringfügig höher ist wie derjenige Fluiddruck, der benötigt wird, um das Hauptventilglied unter Überwindung der entgegenwirkenden Kräfte in die zweite Schaltstellung zu bewegen. Der Dichtungsring ist in dem vorliegenden Zusammenhang insbesondere als sogenannter Nutring ausgebildet, der eine Ringnut mit axial orientierter Öffnung aufweist, wobei diese Ringnut radial außen von der Dichtlippe begrenzt ist. Der Dichtungsring ist so eingebaut, dass die Nutöffnung der Ringnut von der ersten Antriebsfläche wegweist und in Richtung des zweiten Antriebsraumes orientiert ist.

Die erste Antriebsfläche ist zweckmäßigerweise an einem Antriebskolben des Hauptventilgliedes ausgebildet, der das Rückschlagventilglied trägt und der sich vorzugsweise an einer der beiden axialen Endbereiche des Hauptventilgliedes befindet. In diesem Zusammenhang ist es von Vorteil, wenn der zweite Antriebsraum wenigstens zwei axial beabstandet zueinander angeordnete Teilräume aufweist, von denen der eine dem dem Antriebskolben axial entgegengesetzten Endbereich des Hauptventilgliedes zugeordnet ist und von denen der andere sich unmittelbar auf der dem ersten Antriebsraum axial entgegengesetzten Seite des Antriebskolbens befindet, so dass dieser andere Teilraum des zweiten Antriebsraumes durch den Antriebskolben vom ersten Antriebsraum abgetrennt wird. Indem diese beiden Teilräume mittels eines sich im Innern des Hauptventilgliedes erstreckenden Verbindungskanals in Fluidverbindung miteinander stehen, wird erreicht, dass bei einer Fluidbeaufschlagung des zweiten Antriebsraumes die die beiden Teilräume des zweiten Antriebsraumes begrenzenden Teilflächen der zweiten Antriebsfläche mit einem Druckmedium beaufschlagt werden, das eine Stellkraft in Richtung der ersten Schaltstellung ausübt.

Obgleich das Mehrwegeventil prinzipiell mit jedwedem fließfähigen Druckmedium betrieben werden kann, erweist es sich besonders vorteilhaft für einen Betrieb mit einem gasförmigen Druckmedium und insbesondere mit Druckluft.

Nachfolgend wird die Erfindung anhand der beiliegenden Zeichnung näher erläutert. In dieser zeigen:
- Figur 1: eine bevorzugte erste Ausführungsform des erfindungsgemäßen Mehrwegeventils bei durch das Hauptventilglied eingenommener erster Schaltstellung, die die gleichzeitige Einnahme einer Freigabestellung des Druckentlastungsventils zur Folge hat, ein Teilbereich dessen ergänzend in einem vergrößerten Ausschnitt abgebildet ist, und
- Figur 2: das Mehrwegeventil aus Figur 1 bei von dem Hauptventilglied eingenommener zweiter Schaltstellung, wobei in einem vergrößerten Ausschnitt ein Teilbereich des Rückschlagventils bei Einnahme seiner Offenstellung gezeigt ist.

Das insgesamt mit Bezugsziffer 1 bezeichnete vorgesteuerte Mehrwegeventil verfügt über ein Hauptventil 2 und ein einziges, elektrisch betätigbares Vorsteuerventil 3, das seinerseits das Hauptventil 2 durch fluidische Ansteuerung betätigt.

Hauptventil 2 und Vorsteuerventil 3 sind zweckmäßigerweise zu einer das Mehrwegeventil 1 bildenden Baueinheit zusammengefasst.

Das Mehrwegeventil 1 verfügt über ein Ventilgehäuse 4, das beim Ausführungsbeispiel mehrteilig gestaltet ist, wobei ein erster Gehäuseteil 4a das Gehäuse des Hauptventils 2 und ein zweiter Gehäuseteil 4b das Gehäuse des Vorsteuerventils 3 bildet.

Im Innern des Ventilgehäuses 4 ist eine sich in Achsrichtung einer Längsachse 5 erstreckende Ventilkammer 6 ausgebildet. Diese Ventilkammer 6 gehört zum Hauptventil 2 und befindet sich zweckmäßigerweise innerhalb des ersten Gehäuseteils 4a.

In der Ventilkammer 6 befindet sich ein in deren Längsrichtung linear bewegbares Ventilglied, das zur besseren Unterscheidung im Folgenden als Hauptventilglied 7 bezeichnet sei. Das Mehrwegeventil 1 des Ausführungsbeispiels ist ein sogenanntes Schieberventil, wobei das Hauptventilglied 7 als sogenannter Ventilschieber konzipiert ist. In diesem Zusammenhang verfügt das Hauptventilglied 7 über einen sich in Achsrichtung der Längsachse 5 erstreckenden, insbesondere kolbenähnlich gestalteter Schieberkörper 8, der bevorzugt einstückig ausgebildet ist und der über einen in Längsrichtung abgestuften Außenumfang verfügt. Auf diese Weise verfügt der Schieberkörper 8 über mindestens einen und beim Ausführungsbeispiel mehrere axial beabstandete Einschnürungsabschnitte 12 geringeren Durchmessers, die jeweils axial beidseits von einem Steuerabschnitt 13 größeren Durchmessers flankiert sind. Im Querschnitt gesehen hat der Schieberkörper 8 vorzugsweise eine runde, insbesondere kreisrunde Außenkontur.

In der Ventilkammer 6 befinden sich mehrere axial beabstandet zueinander angeordnete ringförmige Dichtungen bzw. Dichtungsringe 14, die bezüglich dem Ventilgehäuse 4 ortsfest angeordnet sind und den Schieberkörper 8 konzentrisch umschließen. Ihr Innendurchmesser ist so gewählt, dass sie mit dem Außenumfang eines sie durchsetzenden Steuerabschnittes 13 in Dichtkontakt stehen können.

Die zwischen axial jeweils unmittelbar benachbarten Dichtungen 14 angeordneten Abschnitte der Ventilkammer 6 kommunizieren jeweils mit einem Ventilkanal 15. Jeder Ventilkanal 15 mündet zu einer Außenfläche des Ventilgehäuses 4 aus. Exemplarisch fungiert ein mit dem mittleren Ventilkammerabschnitt kommunizierender Ventilkanal 15 als Speisekanal 15a, der mit einer nicht weiter abgebildeten externen Druckquelle verbindbar ist. Die beiden Ventilkanäle 15, die mit den den mittleren Ventilkammerabschnitt flankierenden beiden Ventilkammerabschnitten verbunden sind, fungieren als Arbeitskanäle 15b, 15c und sind mit einem zu betätigenden Verbraucher verbindbar, beispielsweise mit einem fluidbetätigten Antrieb, insbesondere ein Pneumatikzylinder. Die beiden axial ganz außen liegenden Ventilkammerabschnitte kommunizieren mit je einem Ventilkanal 15, der als Fluidabführkanal fungiert und je nach Druckmedium mit einem Tank oder direkt mit der Atmosphäre verbunden ist, mithin mit einer Drucksenke und insbesondere mit einem Bereich, in dem lediglich Atmosphärendruck herrscht. Das Mehrwegeventil ist somit insbesondere ein 5/2-Wegeventil.

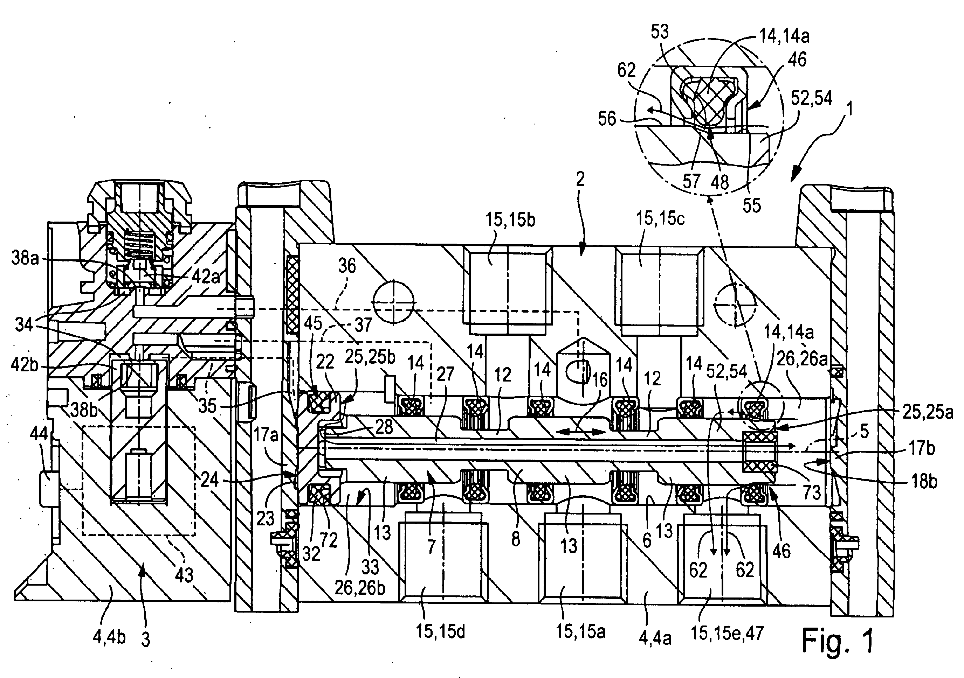

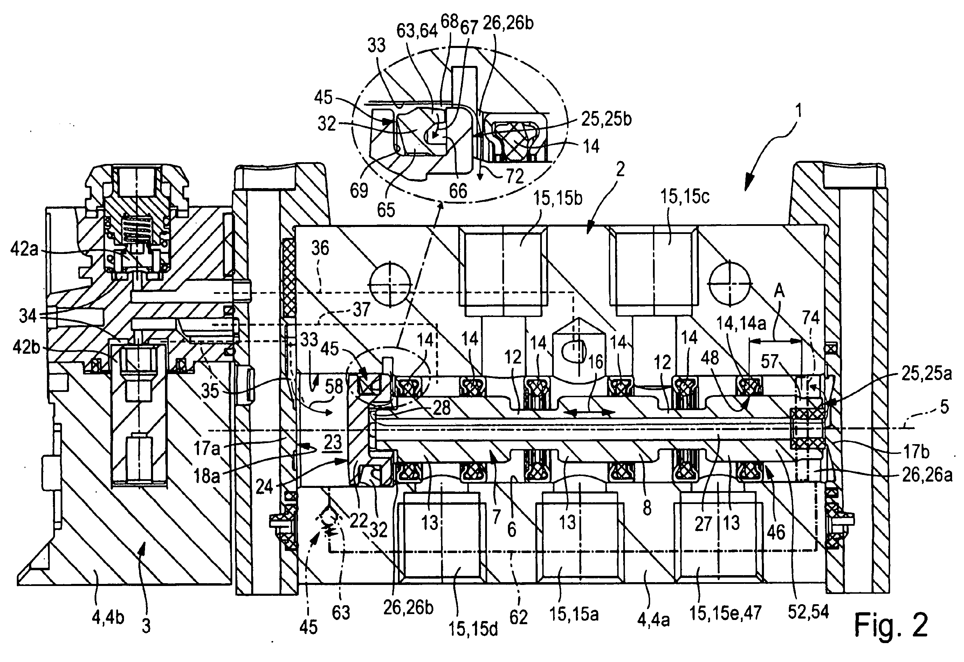

Im Rahmen einer durch einen Doppelpfeil angedeuteten linearen Umschaltbewegung 16 kann das Hauptventilglied 7 und mithin der Schieberkörper 8 wahlweise in einer aus Figur 1 ersichtlichen ersten Schaltstellung oder in einer aus Figur 2 ersichtlichen zweiten Schaltstellung positioniert werden. Die Ventilkammer 6 ist an ihren beiden Stirnseiten durch je eine erste bzw. zweite Abschlusswand 17a, 17b des Ventilgehäuses 4 abgeschlossen. Diese beiden Abschlusswände 17a, 17b bilden eine erste bzw. zweite Anschlagfläche 18a, 18b, die dem Hauptventilglied 7 axial zugewandt ist. Die beiden Schaltstellungen sind dadurch vorgegeben, dass das Hauptventilglied 7 entweder an der einen oder an der anderen Anschlagfläche 18a, 18b zur Anlage gelangt.

Je nach Schaltstellung ergeben sich unterschiedliche Zuordnungen der Einschnürungsabschnitte 12 und Steuerabschnitte 13 in Bezug auf die Dichtungen 14. Dementsprechend werden die Ventilkanäle 15 in unterschiedlichem Muster miteinander verschaltet. Dadurch sind beim Ausführungsbeispiel die beiden Arbeitskanäle 15b, 15c abwechselnd und gegensinnig mit entweder dem Speisekanal 15a oder einem der beiden Fluidabführkanäle 15d, 15e verbunden. Auf diese Weise können zwei Kammern eines angeschlossenen Verbrauchers abwechselnd mit Druckmedium beaufschlagt oder druckentlastet werden.

Das Hauptventilglied 7 weist an einem seiner beiden Endbereiche zweckmäßigerweise einen Antriebskolben 22 auf, dessen Durchmesser größer ist als der Durchmesser des Schieberkörpers 8 im Bereich seiner Steuerabschnitte 13. Der Antriebskolben 22 und der Schieberkörper 8 können einstückig miteinander ausgebildet oder als gesonderte Komponenten realisiert sein.

Das Hauptventilglied 7 unterteilt die Ventilkammer 6 fluiddicht in zwei von den Endabschnitten der Ventilkammer 6 gebildete erste und zweite Antriebsräume 23, 26. Der erste Antriebsraum 23 wird einerseits von der ersten Abschlusswand 17a und, gegenüberliegend, von einer am Hauptventilglied 7 ausgebildeten ersten Antriebsfläche 24 begrenzt. Exemplarisch befindet sich die erste Antriebsfläche 24 an der vom Schieberkörper 8 abgewandten Stirnfläche des Antriebskolbens 22. Druckmedium, das sich in dem ersten Antriebsraum 23 befindet, drückt auf die erste Antriebsfläche 24 und übt somit eine in Richtung der zweiten Schaltstellung wirkende fluidische Stellkraft auf das Hauptventilglied 7 aus.

Der zweite Antriebsraum 26 ist einerseits von der zweiten Abschlusswand 17b und andererseits von einer am Hauptventilglied 7 angeordneten, der zweiten Abschlusswand 17 zugewandten zweiten Antriebsfläche 25 begrenzt. Hier ergibt sich allerdings die zweckmäßige Besonderheit, dass sich der zweite Antriebsraum 26 aus zwei axial zueinander beabstandet ersten und zweiten Teilräumen 26a, 26b zusammensetzt, die jeweils von einer am Hauptventilglied 7 ausgebildeten ersten bzw. zweiten Teilfläche 25a, 25b der zweiten Antriebsfläche 25 begrenzt sind.

Die erste Teilfläche 25a ist die dem Antriebskolben 22 entgegengesetzte Stirnfläche des Schieberkörpers 8. Dementsprechend wird der erste Teilraum 26a von dieser ersten Teilfläche 25a begrenzt. Als weitere, der zweiten Abschlusswand 17b gegenüberliegende Begrenzungswand des ersten Teilraumes 26a fungiert die der zweiten Abschlusswand 17b am nächsten liegende Dichtung 14.

Die zweite Teilfläche 25b der zweiten Antriebsfläche 25 ist von der der ersten Antriebsfläche 24 axial entgegengesetzten rückwärtigen Stirnfläche des Antriebskolbens 22 gebildet. Dementsprechend ist der zweite Teilraum 26b ein Ringraum, der den Schieberkörper 8 axial im Anschluss an den Antriebskolben 22 umschließt und der gegenüberliegend der zweiten Teilfläche 25b von der dem Antriebskolben 22 am nächsten liegenden Dichtung 14 begrenzt ist.

Beide Teilräume 26a, 26b des zweiten Antriebsraumes 26 befinden sich mittels eines Verbindungskanals 27 in ständiger Fluidverbindung. Dieser Verbindungskanal ist vorzugsweise im Innern des Hauptventilgliedes 7 ausgebildet, so dass er selbiges durchsetzt. Exemplarisch verläuft er koaxial im Innern des Schieberkörpers 8, wobei er einenends zu der der zweiten Abschlusswand 17b zugewandten Stirnfläche (erste Teilfläche 25a) des Schieberkörpers 8 ausmündet und andernends über quer verlaufende Kanalabschnitte 28 im Bereich des Außenumfanges des Schieberkörpers 8 zu dem zweiten Teilraum 26b des zweiten Antriebsraumes 26 ausmündet. Mithin stehen die beiden Teilräume 26a, 26b in ständiger Fluidverbindung miteinander.

Bei einer nicht abgebildeten alternativen Ausführungsform verläuft der Verbindungskanal 27 in der Wandung des Ventilgehäuses 4.

Ein bei Einnahme der zweiten Schaltstellung in dem zweiten Antriebsraum 26 herrschender Fluiddruck übt über die zweite Antriebsfläche 25 eine in Richtung der ersten Schaltstellung orientierte Stellkraft auf das Hauptventilglied 7 aus.

Der Antriebskolben 22 trägt im Bereich seines peripheren Außenumfanges einen Dichtungsring 32. Dieser liegt normalerweise gleitverschieblich an einer von der Innenumfangsfläche der Ventilkammer 6 gebildeten Dichtfläche 33 an. Auf diese Weise ist der erste Antriebsraum 23 normalerweise vom zweiten Teilraum 26b des zweiten Antriebsraumes 26 fluiddicht abgetrennt.

Das schon erwähnte, bevorzugt einzige Vorsteuerventil 3 ist zur alternativen Fluidbeaufschlagung oder Druckentlastung des ersten Antriebsraumes 23 ausgebildet. Es ist zweckmäßigerweise als elektrisch betätigbares 3/2-Wegeventil konzipiert. Es verfügt in seinem Innern über eine Vorsteuerkammer 34, die über einen zum Teil nur gestrichelt angedeuteten Vorsteuer-Arbeitskanal 35 mit dem ersten Antriebsraum 23 in Fluidverbindung steht.

Über je eine von einem Ventilsitz 38a, 38b umrahmte Öffnung hinweg mündet in die Vorsteuerkammer 34 außerdem noch ein Vorsteuer-Speisekanal 36 und ein Vorsteuer-Entlastungskanal 37, die jeweils zum Teil nur gestrichelt angedeutet sind. Der Vorsteuer-Speisekanal 36 kommuniziert mit dem Speisekanal 15a des Hauptventils 2, um das Vorsteuerventil 3 mit einem Antriebsfluid zu versorgen. Dieses Antriebsfluid könnte allerdings auch unabhängig vom Hauptventil 2 gesondert in den Vorsteuer-Speisekanal 36 eingespeist werden. Der Vorsteuer-Entlastungskanal 37 kommuniziert mit einer Drucksenke, insbesondere der Atmosphäre, was beim Ausführungsbeispiel dadurch geschieht, dass er mit dem ersten Fluidabführkanal 15d in Verbindung steht.

Das Vorsteuerventil 3 verfügt über mindestens ein und beim Ausführungsbeispiel zwei Vorsteuer-Ventilglieder 42a, 42b, die je einem der Ventilsitze 38a, 38b zugeordnet sind und die derart positionierbar sind, dass sie abwechselnd und gegensinnig an den Ventilsitzen 38a, 38b anliegen bzw. davon abgehoben sind. Auf diese Weise kann der Vorsteuer-Arbeitskanal 35 und mithin der erste Antriebsraum 23 wahlweise mit einem Antriebsfluid beaufschlagt oder druckentlastet werden.

Für die Bewegungen der Vorsteuer-Ventilglieder 42a, 42b verantwortlich ist eine elektrisch aktivierbare Betätigungseinheit 43 des Vorsteuerventils 3, bei der es sich insbesondere um eine Elektromagneteinheit handelt und die ihre Betätigungssignale über von außen her zugängliche elektrische Schnittstellenmittel 44 empfangen kann.

Der zweite Antriebsraum 26 erhält das zum Umschalten des Hauptventils 7 in die erste Schaltstellung erforderliche Druckmedium aus dem ersten Antriebsraum 23. Hierzu sind die beiden Antriebsräume 23, 26 über ein Rückschlagventil 45 fluidisch miteinander verbunden. Dieses Rückschlagventil 45 ist so ausgebildet und angeordnet, dass es eine Fluidströmung aus dem ersten Antriebsraum 23 in den zweiten Antriebsraum 26 zulässt, wenn zwischen diesen beiden Antriebsräumen 23, 26 eine gewisse Druckdifferenz zugunsten des ersten Antriebsraumes 23 vorliegt. In der Gegenrichtung sperrt das Rückschlagventil 45. Eine Fluidströmung aus dem zweiten Antriebsraum 26 in den ersten Antriebsraum 23 ist somit verhindert.

Das Mehrwegeventil 1 ist außerdem mit einem von dem Rückschlagventil 45 funktionell unabhängigen Druckentlastungsventil 46 ausgestattet. Anders als das Rückschlagventil 45 arbeitet das Druckentlastungsventil 46 nicht druckabhängig, sondern positionsabhängig in Abhängigkeit von der Axialposition des Hauptventilgliedes 7.

Das Druckentlastungsventil 46 steuert die Fluidverbindung zwischen dem zweiten Antriebsraum 26 und einem Druckentlastungskanal 47, der mit einer Drucksenke und insbesondere mit der Atmosphäre verbunden ist. Mithin herrscht im Druckentlastungskanal 47 im Wesentlichen atmosphärischer Druck.

Der Druckentlastungskanal 47 kann ein eigenständiger Kanal des Mehrwegeventils 1 sein. Vorzugsweise ist er jedoch von einem der sowieso vorhandenen Fluidabführkanäle des Hauptventils 2 gebildet, exemplarisch von dessen zweiten Fluidabführkanal 15e. Dies reduziert den baulichen Aufwand.

Das Druckentlastungsventil 46 weist zum einen eine bezüglich dem Ventilgehäuse 4 ortsfeste Dichtfläche 48 auf und zum anderen ein bezüglich dieser Dichtfläche 48 insbesondere linear bewegliches Steuerglied 52. Je nachdem, ob das Steuerglied 52 an der Dichtfläche 48 anliegt oder nicht, wird ein zwischen dem zweiten Antriebsraum 26 und dem Druckentlastungskanal 47 befindlicher Überströmspalt 53 abgesperrt oder freigegeben. Das Steuerglied 52 ist durch das Hauptventilglied 7 antreibbar, wobei es sich prinzipiell um eine bezüglich dem Hauptventilglied 7 separate Komponente handeln kann, die beispielsweise im Ventilgehäuse 4 bewegbar gelagert ist und auf die das Hauptventilglied 7 positionsabhängig einwirken kann. Besonders vorteilhaft ist jedoch eine Ausgestaltung, bei der das Steuerglied 52 ein unmittelbarer Bestandteil des Hauptventilgliedes 7 ist, was auf das Ausführungsbeispiel zutrifft.

Beim Ausführungsbeispiel bildet unmittelbar der dem Antriebskolben 22 axial entgegengesetzte Endabschnitt des Hauptventilglieds 7 und insbesondere des Schieberkörpers 8 das Steuerglied 52. Hierbei ist die der zweiten Abschlusswand 17b am nächsten liegende ringförmige Dichtung 14, 14a als Bestandteil des Druckentlastungskanals 47 anzusehen, indem deren radial nach innen orientierte Umfangsfläche die in diesem Falle ringförmige Dichtfläche 48 des Druckentlastungsventils 46 bildet. Das von dem zugeordneten Endabschnitt 54 des Hauptventilglieds 7 gebildete Steuerglied 52 greift durch die ringförmige Dichtfläche 48 koaxial hindurch, wobei es eine in axialer Richtung abgestufte Außenkontur aufweist. Ein sich unmittelbar an die Stirnfläche bzw. die erste Teilfläche 25a anschließender Längenabschnitt definiert einen zylindrisch gestalteten Freigabeabschnitt 55, dessen Außendurchmesser geringer ist als der Innendurchmesser des Dichtungsringes 14, 14a. An den Freigabeabschnitt 55 schließt sich, insbesondere über eine abgeschrägte Ringstufe hinweg, ein als Absperrabschnitt 56 bezeichneter Längenabschnitt an, dessen bevorzugt ebenfalls zylindrischer Außenumfang einen größeren Durchmesser als der Freigabeabschnitt hat. Der Durchmesser des Absperrabschnittes 56 ist so groß, dass er in die ringförmige Dichtfläche 48 eintauchen kann und dabei die ringförmige Dichtfläche 48 mit zumindest leichter Vorspannung ringsum radial an dem Absperrabschnitt 56 anliegt.

Befindet sich das Hauptventilglied 7 in der aus Figur 2 ersichtlichen zweiten Schaltstellung, nimmt der Absperrabschnitt 56 des Steuergliedes 52 eine von der Dichtfläche 48 konzentrisch umschlossene Position ein, so dass der Überströmspalt 53 verschlossen und der zweite Antriebsraum 26 von dem Druckentlastungskanal 47 abgesperrt ist. Mithin nimmt das Steuerglied 52 eine Absperrstellung ein, wenn sich das Hauptventilglied 7 in der zweiten Schaltstellung befindet.

Der Absperrabschnitt 56 hat in Achsrichtung der Längsachse 5 eine wesentlich größere Länge als die in der Absperrstellung an ihm dichtend anliegende Dichtfläche 48. Außerdem ist die axiale Länge des zweiten Teilraumes 26a größer als die axiale Länge des Freigabeabschnittes 55. Dies hat zur Folge, dass die Dichtfläche 48 in der Absperrstellung des Steuergliedes 52 in einem Bereich des Absperrabschnittes 56 anliegt, der mit einem axialen Abstand A zu der zwischen dem Freigabeabschnitt 55 und dem Absperrabschnitt 56 befindlichen Übergangsstufe 57 angeordnet ist.

Andererseits ist die Übergangsstufe 57 so platziert, dass die Freigabestellung vorliegt, wenn das Hauptventilglied 7 in der ersten Schaltstellung positioniert ist. Dies bedeutet, dass die Freigabestellung während eines Verstellbereiches des Hauptventilgliedes 7 eingenommen wird, der sich zwischen der ersten Schaltstellung und einer zwischen der ersten Schaltstellung und der zweiten Schaltstellung liegenden Position erstreckt.

Im Folgenden sei eine typische Betriebsweise des erfindungsgemäßen Mehrwegeventils 1 beschrieben. Ausgangspunkt für die Betrachtung ist die aus Figur 1 ersichtliche erste Schaltstellung, wobei die beiden Antriebsräume 23, 26 druckentlastet sind.

Da auf das Hauptventilglied 7 zunächst noch keine axialen Fluidkräfte einwirken, verharrt es in der ersten Schaltstellung. Diese erste Schaltstellung ist mechanisch durch zum einen die Reibung zwischen den Dichtungen bzw. Dichtungsringen 14 und den Steuerabschnitten 13 sowie zum anderen die Reibung zwischen dem Dichtungsring 32 und der Dichtfläche 33 stabilisiert.

In dieser ersten Schaltstellung ist das Rückschlagventil 45 geschlossen und das Druckentlastungsventil 46 befindet sich in der Freigabestellung.

Um nun das Hauptventilglied 7 in die zweite Schaltstellung umzuschalten, wird das Vorsteuerventil 3 so betätigt, dass als Antriebsfluid fungierendes Druckmedium gemäß Pfeil 58 (Figur 2) durch den Vorsteuer-Arbeitskanal 35 hindurch in den ersten Antriebsraum 23 einströmt. Dieses Antriebsfluid beaufschlagt die erste Antriebsfläche 24 und ruft eine das Hauptventilglied 7 in Richtung der zweiten Schaltstellung verlagernde Stellkraft hervor. Das Rückschlagventil 45 bleibt hierbei geschlossen, da sich während der Umschaltbewegung innerhalb des ersten Antriebsraumes 23 nicht der volle Nenndruck des anstehenden Druckmediums aufbauen kann und das Rückschlagventil 45 zweckmäßigerweise so ausgelegt ist, dass es erst öffnet, wenn sich der Druck im ersten Antriebsraum 23 bis in den Bereich des Nenndruckes aufgebaut hat. Jedenfalls sollte das Rückschlagventil 45 so ausgelegt sein, dass es erst bei solchen Drücken öffnet, die größer sind, als der zum Verschieben des Hauptventilgliedes 7 aus der ersten Schaltstellung in die zweite Schaltstellung erforderliche Fluiddruck. Auf diese Weise kann ein Überströmen von Druckmedium aus dem ersten Antriebsraum 23 in den zweiten Antriebsraum 26 während der Umschaltphase des Hauptventilgliedes 7 unterbunden werden.

Das Hauptventilglied 7 bewegt sich mit hoher Geschwindigkeit in die zweite Schaltstellung, da ihm zumindest anfänglich kein fluidischer Gegendruck im zweiten Antriebsraum 26 entgegenwirkt. Dies ist dadurch bedingt, dass der zweite Antriebsraum 26 vor Beginn der Umschaltbewegung druckentlastet war. Zwar nimmt das Druckentlastungsventil 46 schon während des Umschaltens des Hauptventilgliedes 7 in die zweite Schaltstellung die Absperrstellung ein, weil der Absperrabschnitt 56 in den Dichtungsring 14a eintaucht. Gleichwohl ist das dann in dem zweiten Antriebsraum 26 eingesperrte geringe Fluidvolumen nicht in der Lage, eine relevante Gegenkraft auf das Hauptventilglied 7 auszuüben.

Das Vorsteuerventil 3 wird so lange in seinem die Fluidbeaufschlagung des ersten Antriebsraumes 23 bewirkenden Betätigungszustand gehalten, wie das Hauptventilglied 7 in der zweiten Schaltstellung verbleiben soll.

Da mithin das Hauptventilglied 7 längere Zeit in der durch die zweite Anschlagfläche 18b definierten zweiten Schaltstellung gehalten wird, kann sich im ersten Antriebsraum 23 der volle Nenndruck des Druckmediums aufbauen. Dies führt zu einem Öffnen des Rückschlagventils 45 mit der Folge, dass Druckmedium aus dem ersten Antriebsraum 23 in den zweiten Antriebsraum 26 überströmt und sich im zweiten Antriebsraum 26 ein Fluiddruck aufbaut, der letztlich genauso groß ist wie der im ersten Antriebsraum 23 herrschende Druck.

Damit ist jedoch noch keine Positionsänderung des Hauptventilglieds 7 verbunden, weil die beiden Antriebsflächen 24, 25 gleich groß sind und somit auf das Hauptventilglied 7 keine resultierende axiale Fluidkraft einwirkt. Das Hauptventil verharrt daher weiterhin in der zweiten Schaltstellung, wobei es durch die weiter oben schon angesprochenen Reibungskräfte in seiner Position stabilisiert ist.

Nachdem sich der Druckausgleich eingestellt hat, schließt auch das Rückschlagventil 45 wieder.

Um das Hauptventilglied 7 nun wieder in die erste Schaltstellung zurückzubewegen, genügt es, den ersten Antriebsraum 23 druckmäßig zu entlasten. Dies geschieht durch entsprechende Betätigung des Vorsteuerventils 3, so dass der erste Antriebsraum 23 über den Vorsteuer-Arbeitskanal 35 und den Vorsteuer-Entlastungskanal 37 mit der Atmosphäre verbunden wird. Die Folge dieses Druckabbaus im ersten Antriebsraum 23 ist, dass sich das Hauptventilglied 7 auf Grund des im zweiten Antriebsraum 26 eingeschlossenen und auf die zweite Antriebsfläche 25 einwirkenden Druckmediums in Richtung der ersten Schaltstellung bewegt. Dies geschieht mit hoher Geschwindigkeit, weil kein nennenswerter Gegendruck im ersten Antriebsraum 23 zu überwinden ist und weil der im zweiten Antriebsraum 26 herrschende Druck zumindest anfänglich dem Nenndruck des zur Verfügung gestellten Druckmediums entsprechen kann. Auch ist die von dem im zweiten Antriebsraum 26 befindlichen Druckmedium beaufschlagte zweite Antriebsfläche 25 relativ groß. Bedingt durch die Nutzung der Rückseite des Antriebskolbens 22 als zweite Teilfläche 25b, kann die zweite Antriebsfläche 25 insbesondere gleich groß sein wie die erste Antriebsfläche 24, so dass sich in beiden Umschaltrichtungen zumindest annähernd gleich hohe Umschaltgeschwindigkeiten und entsprechend geringe Umschaltzeiten realisieren lassen. Spätestens wenn das Hauptventilglied 7 in die erste Schaltstellung gelangt ist, findet eine Druckentlastung des zweiten Antriebsraumes 26 statt, weil das Steuerglied 52 nun die oben erwähnte Freigabestellung einnimmt. Das zuvor noch eingeschlossene Druckmedium kann dann gemäß Pfeilen 62 durch den freigelegten Überströmspalt 53 hindurch in den Druckentlastungskanal 47 und mithin zur Atmosphäre ausströmen.

Auf Grund der weiter oben beschriebenen geometrischen Gegebenheiten des Steuergliedes 52, beginnt die Druckentlastung des zweiten Antriebsraumes 26 zweckmäßigerweise schon während des Umschaltens des Hauptventilgliedes 7 aus der ersten Schaltstellung in die zweite Schaltstellung, d.h. noch vor Erreichen der ersten Schaltstellung. Dies hat den vorteilhaften Effekt eines raschen Entlüftens des zweiten Antriebsraumes 26, was die Realisierung eines hohen Umschalttaktes des Hauptventilgliedes 7 begünstigt. Insbesondere beginnt die Druckentlastung bzw. Freigabestellung mit der Endphase der Annäherung des Hauptventilgliedes 7 an die erste Schaltstellung und bleibt kontinuierlich bis zum Erreichen der ersten Schaltstellung bestehen, wobei sie auch während der ersten Schaltstellung des Hauptventilgliedes 7 ständig aufrechterhalten wird.

Es wäre prinzipiell gleichwohl denkbar, das Rückschlagventil so auszulegen, dass es erst bei Erreichen der ersten Schaltstellung in die Freigabestellung umschaltet. Ebenso wäre prinzipiell eine dahingehende Gestaltung denkbar, dass die Entlüftung bzw. Druckentlastung nur während des Umschaltvorganges stattfindet, in der ersten Schaltstellung jedoch das Druckentlastungsventil 46 bereits wieder die Absperrstellung eingenommen hat. Als vorteilhafter wird jedoch die Realisierungsform des Ausführungsbeispiels angesehen.

Das die Fluidversorgung des zweiten Antriebsraumes 26 steuernde Rückschlagventil 45 ist bevorzugt zumindest teilweise ein Bestandteil des Hauptventilgliedes 7. Hiervon abweichend wäre es prinzipiell jedoch auch denkbar, wie dies in Figur 2 strichpunktiert angedeutet ist, das Rückschlagventil 45 im oder am Ventilgehäuse 4 anzuordnen und in den Verlauf eines sich im Ventilgehäuse 4 erstreckenden Verbindungskanals 62 einzuschalten, der einerseits in den ersten Antriebsraum 23 und andererseits in den zweiten Antriebsraum 26 einmündet.

In allen Fällen verfügt das Rückschlagventil 45 über ein federnd in eine Schließstellung vorgespanntes Rückschlagventilglied 63. Dieses Rückschlagventilglied 63 ist vorzugsweise von einer flexiblen Dichtlippe 64 des zur gehäuseseitigen Abdichtung des Antriebskolbens 62 sowieso notwendigen Dichtungsringes 32 gebildet.

Exemplarisch ist dieser Dichtungsring 32 nach Art eines sogenannten Nutringes ausgebildet und verfügt über einen zur Fixierung am Antriebskolben 22 dienenden, radial innen angeordneten ringförmigen Basisabschnitt 65, ausgehend von dem die ringförmige Dichtlippe 64 nach radial außen ragt und normalerweise unter Abdichtung an der den Antriebskolben 22 umschließenden Dichtfläche 33 des Ventilgehäuses 4 anliegt. Die Dichtlippe 64 ist durch eine Ringnut 66 des Dichtringes 32 von dem Basisabschnitt 65 abgetrennt, deren Öffnung in Richtung zum zweiten Antriebsraum 26 weist.

Indem der Dichtungsring 32 aus Material mit gummielastischen Eigenschaften besteht, liegt die Dichtlippe 64 normalerweise unter radialer Vorspannung federnd an der Dichtfläche 33 an. In diesem Fall ist eine Fluidverbindung zwischen dem ersten Antriebsraum 23 und dem zweiten Teilraum 26b des zweiten Antriebsraumes 26 geschlossen.

Steigt der Fluiddruck im ersten Antriebsraum 23 über einen durch die Federvorspannung der Dichtlippe 64 definierten Schwellwert hinaus an, kann das Druckmedium die das Rückschaltventilglied 63 bildende Dichtlippe 64 gemäß Pfeil 67 in Figur 2 in eine Offenstellung nach innen verschwenken, so dass sie von der Dichtfläche 33 abhebt und ein Durchtrittsspalt 68 freigegeben wird, der es dem Druckmedium erlaubt, gemäß Pfeil 72 aus dem ersten Antriebsraum 23 in den zweiten Antriebsraum 26 überzutreten.

Bedingt dadurch, dass die axiale Öffnung der Ringnut 66 von der ersten Antriebsfläche 24 wegweist, wirkt der im zweiten Teilraum 26b herrschende Fluiddruck von radial innen her auf die Dichtlippe 64 ein und drückt sie gegen die Dichtfläche 33. Auf diese Weise ist eine Fluidströmung aus dem zweiten Antriebsraum 26 durch das Rückschlagventil 45 hindurch in den ersten Antriebsraum 23 hinein definitiv ausgeschlossen.

Der Dichtungsring 32 ist zweckmäßigerweise in einer nach radial außen hin offenen Ringnut 69 aufgenommen, die im Außenumfang des Antriebskolbens 22 ausgebildet ist.

Um den Aufprall des Hauptventilgliedes 7 beim Erreichen der zweiten Schaltstellung zu mindern, kann die zweite Anschlagfläche 18b oder - vorzugsweise - das Hauptventilglied 7 mit einem gummielastischen Pufferelement 73 ausgestattet sein. Selbiges ist beim Ausführungsbeispiel im Bereich der ersten Teilfläche 25a in den Schieberkörper 8 eingesetzt, wobei es hülsenförmig ausgebildet ist und seine zentrale Durchgangsöffnung einen Längenabschnitt des Verbindungskanals 27 bildet.

Abweichend vom Ausführungsbeispiel wäre es auch möglich, den zweiten Antriebsraum 26 nicht in zwei Teilräume aufzutrennen. Ferner wäre es möglich, wie dies in Figur 2 strichpunktiert angedeutet ist, an dem dem Antriebskolben 22 entgegengesetzten Endbereich des Hauptventilgliedes 7 einen weiteren Antriebskolben 74 vorzusehen, dessen vom Antriebskolben 22 abgewandte Stirnfläche die zweite Antriebsfläche bildet, wobei diese zweite Antriebsfläche dann gleich groß wie die erste Antriebsfläche 24 ausgebildet sein kann, so dass sich in beiden Bewegungsrichtungen des Hauptventilgliedes 7 gleich hohe Umschaltgeschwindigkeiten verwirklichen lassen.

## Patentansprüche

1. Vorgesteuertes Mehrwegeventil, mit einem in einem Ventilgehäuse (4) zwischen einer ersten Schaltstellung und einer zweiten Schaltstellung linear bewegbar angeordneten Hauptventilglied (7), das einander entgegengesetzt orientierte erste und zweite Antriebsflächen (24, 25) aufweist, von denen die erste Antriebsfläche (24) einen zum Umschalten des Hauptventilgliedes (7) in die zweite Schaltstellung fluidisch beaufschlagbaren ersten Antriebsraum (23) und die zweite Antriebsfläche (25) einen zum Umschalten des Hauptventilgliedes (7) in die erste Schaltstellung fluidisch beaufschlagbaren zweiten Antriebsraum (26) begrenzt, und mit einem Vorsteuerventil (3) zur alternativen Fluidbeaufschlagung oder Druckentlastung des ersten Antriebsraumes (23), **dadurch gekennzeichnet, dass** der erste Antriebsraum (23) mit dem zweiten Antriebsraum (26) über ein in Richtung des zweiten Antriebsraumes (26) druckabhängig öffnendes und in der Gegenrichtung sperrendes Rückschlagventil (45) verbunden ist, und dass das Mehrwegeventil ein durch das Hauptventilglied (7) in Abhängigkeit von dessen Position betätigbares Druckentlastungsventil (46) aufweist, das in der zweiten Schaltstellung des Hauptventilgliedes (7) den zweiten Antriebsraum (26) von einem Druckentlastungskanal (47) absperrt und das eine Fluidverbindung zwischen dem zweiten Antriebsraum (26) und dem Druckentlastungskanal (47) freigibt, wenn das Hauptventilglied (7) aus der zweiten Schaltstellung in die erste Schaltstellung umschaltet oder die erste Schaltstellung einnimmt.

2. Mehrwegeventil nach Anspruch 1, **dadurch gekennzeichnet, dass** das Druckentlastungsventil (46) so ausgebildet ist, dass es die Fluidverbindung zwischen dem ersten Antriebsraum (23) und dem Druckentlastungskanal (47) beim Umschalten des Hauptventilgliedes (7) aus der zweiten in die erste Schaltstellung beginnend mit der Endphase der Annäherung des Hauptventilgliedes (7) an die erste Schaltstellung kontinuierlich bis zum Erreichen der ersten Schaltstellung freigibt.

3. Mehrwegeventil nach Anspruch 1 oder 2, **dadurch gekennzeichnet, dass** das Hauptventilglied (7) als Ventilschieber mit einem länglichen, einen abgestuften Außenumfang aufweisenden und insbesondere einstückigen Schieberkörper (8) ausgebildet ist.

4. Mehrwegeventil nach einem der Ansprüche 1 bis 3, **dadurch gekennzeichnet, dass** das Druckentlastungsventil (46) eine bezüglich dem Ventilgehäuse (4) ortsfeste Dichtfläche (48) und ein diesbezüglich durch das Hauptventilglied (7) bewegbares Steuerglied (52) aufweist, wobei das Steuerglied (52) zur Freigabe der Fluidverbindung zwischen dem zweiten Antriebsraum (26) und dem Druckentlastungskanal (47) von der Dichtfläche (48) abgehoben ist und zum Absperren der Fluidverbindung mit Dichtkontakt an der Dichtfläche (48) anliegt.

5. Mehrwegeventil nach Anspruch 4, **dadurch gekennzeichnet, dass** die Dichtfläche (48) eine nach radial innen orientierte Ringfläche ist, an der das Steuerglied (52) bei Einnahme einer die Fluidverbindung zwischen dem zweiten Arbeitsraum (26) und dem Druckentlastungskanal (47) absperrenden Absperrstellung von radial innen her anliegt und die von dem Steuerglied (52) zweckmäßigerweise koaxial durchsetzt wird.

6. Mehrwegeventil nach Anspruch 5, **dadurch gekennzeichnet, dass** die ringförmige Dichtfläche (48) an einem bezüglich dem Ventilgehäuse (4) ortsfest fixierten Dichtungsring (14, 14a) ausgebildet ist, der das Steuerglied (52) zweckmäßigerweise koaxial umschließt.

7. Mehrwegeventil nach einem der Ansprüche 4 bis 6, **dadurch gekennzeichnet, dass** das Steuerglied (52) ein unmittelbarer Bestandteil des Hauptventilgliedes (7) ist.

8. Mehrwegeventil nach einem der Ansprüche 4 bis 7 in Verbindung mit Anspruch 3, **dadurch gekennzeichnet, dass** das Steuerglied (52) des Druckentlastungsventils (46) von einem Längenabschnitt des Schieberkörpers (8) des Hauptventilgliedes (7) gebildet ist, insbesondere von dem dem zweiten Antriebsraum (26) zugewandten Endabschnitt des Schieberkörpers (8).

9. Mehrwegeventil nach einem der Ansprüche 4 bis 8, **dadurch gekennzeichnet, dass** das bevorzugt von einem Längenabschnitt des Hauptventilgliedes (7) gebildete Steuerglied (52) eine abgestufte Außenkontur aufweist, wobei es über einen zur Anlage an der Dichtfläche (48) ausgebildeten Absperrabschnitt (56) einen sich axial daran anschließenden, einen geringeren Durchmesser aufweisenden Freigabeabschnitt (55) verfügt.

10. Mehrwegeventil nach einem der Ansprüche 1 bis 9, **dadurch gekennzeichnet, dass** es zwei von dem Hauptventilglied (7) gesteuerte, mit einer Drucksenke verbundene oder verbindbare Fluidabführkanäle (15d, 15e) aufweist, wobei einer dieser Fluidabführkanäle (15e) auch den dem Druckentlastungsventil (46) zugeordneten Druckentlastungskanal (47) bildet.

11. Mehrwegeventil nach einem der Ansprüche 1 bis 10, **dadurch gekennzeichnet, dass** das Rückschlagventil (45) ein mit federnder Vorspannung in eine Schließstellung vorgespanntes Rückschlagventilglied (63) aufweist, das in der Schließstellung an einer Dichtfläche (33) dichtend anliegt.

12. Mehrwegeventil nach Anspruch 11, **dadurch gekennzeichnet, dass** zumindest das Rückschlagventilglied (63) des Rückschlagventils (45) ein Bestandteil des Hauptventilgliedes (7) ist.

13. Mehrwegeventil nach Anspruch 12, **dadurch gekennzeichnet, dass** das Hauptventilglied (7) zur Abdichtung des ersten Antriebsraumes (23) einen Dichtungsring (32) mit einer gleitverschieblich an der gehäusefesten Dichtfläche (33) anliegenden flexiblen Dichtlippe (64) aufweist, wobei diese Dichtlippe (64) das Rückschlagventilglied (63) bildet.

14. Mehrwegeventil nach Anspruch 13, **dadurch gekennzeichnet, dass** der Dichtungsring (32) eine radial außen von der Dichtlippe (64) begrenzte Ringnut (66) aufweist, deren Nutöffnung in eine der ersten Antriebsfläche (24) axial entgegengesetzte Richtung weist.

15. Mehrwegeventil nach einem der Ansprüche 12 bis 14, **dadurch gekennzeichnet, dass** das Hauptventilglied (7) einen die erste Antriebsfläche (24) definierenden Antriebskolben (22) aufweist, der das Rückschlagventilglied (63) trägt und der zweckmäßigerweise an einem der beiden axialen Endbereiche des Hauptventilgliedes (7) angeordnet ist, wobei zweckmäßigerweise der zweite Antriebsraum (26) zwei axial beabstandet zueinander angeordnete Teilräume (26a, 26b) aufweist, von denen der eine (26a) im Bereich des dem Antriebskolben (22) axial entgegengesetzten Endbereiches des Hauptventilgliedes (7) angeordnet ist und von denen der andere (26b) sich auf der dem ersten Antriebsraum (23) axial entgegengesetzten Seite des Antriebskolbens (22) befindet, wobei die beiden Teilräume (26a, 26b) mittels eines sich zweckmäßigerweise im Innern des Hauptventilgliedes (7) erstreckenden Verbindungskanals (27) in fluidischer Verbindung miteinander stehen.

## Claims

1. Piloted multiway valve, with a main valve member (7) mounted in a valve casing (4) and capable of linear movement between a first control position and a second control position and having first and second driving faces (24, 25) oriented in opposite directions, with the first driving face (24) bounding a first drive chamber (23) which may be pressurised with fluid for switching the main valve member (7) into the second control position, and with the second driving face (25) bounding a second drive chamber (26) which may be pressurised with fluid for switching the main valve member (7) into the first control position, and with a pilot valve (3) for alternative fluidic pressurisation or pressure relief of the first drive chamber (23), **characterised in that** the first drive chamber (23) is connected to the second drive chamber (26) via a non-return valve (45) which opens depending on pressure in the direction of the second drive chamber (26) and closes in the opposite direction, and that the multiway valve has a pressure relief valve (46) actuable by the main valve member (7) depending on its position and which in the second control position of the main valve member (7) isolates the second drive chamber (26) from a pressure relief passage (47) and opens a fluidic connection between the second drive chamber (26) and the pressure relief passage (47) when the main valve member (7) switches from the second control position into the first control position or adopts the first control position.

2. Multiway valve according to claim 1, **characterised in that** the pressure relief valve (46) is so designed that it opens the fluidic connection between the first drive chamber (23) and the pressure relief passage (47) on switching of the main valve member (7) from the second into the first control position, commencing with the end phase of the approach of the main valve member (7) to the first control position continuously until reaching the first control position.

3. Multiway valve according to claim 1 or 2, **characterised in that** the main valve member (7) is in the form of a valve spool with an elongated spool body (8) with a stepped outer periphery and in particular in one piece.

4. Multiway valve according to any of claims 1 to 3, **characterised in that** the pressure relief valve (46) has a sealing face (48) which is immovable relative to the valve casing (4) and a control element (52) movable in this respect by the main valve member (7) wherein, to open the fluidic connection between the second drive chamber (26) and the pressure relief passage (47), the control element (52) is lifted from the sealing face (48), and to close the fluidic connection it fits up against the sealing face (48) with sealing contact.

5. Multiway valve according to claim 4, **characterised in that** the sealing face (48) is an annular surface oriented radially inwards, against which the control element (52), on adopting the isolating position closing the fluidic connection between the second drive chamber (26) and the pressure relief passage (47), makes contact from the radial inside, and which the control element (52) passes through, expediently coaxially.

6. Multiway valve according to claim 5, **characterised in that** the annular sealing face (48) is formed on a seal ring (14, 14a) which is fixed immovably relative to the valve casing (4) and which expediently encompasses the control element (52) coaxially.

7. Multiway valve according to any of claims 4 to 6, **characterised in that** the control element (52) is a direct component of the main valve member (7).

8. Multiway valve according to any of claims 4 to 7 in combination with claim 3, **characterised in that** the control element (52) of the pressure relief valve (46) is formed by a length section of the spool body (8) of the main valve member (7), in particular by the end section of the spool body (8) facing the second drive chamber (26).

9. Multiway valve according to any of claims 4 to 8, **characterised in that** the control element (52) formed preferably by a length section of the main valve member (7) has a stepped external contour with a closing section (56) designed to fit up against the sealing face (48) and an axially adjacent opening section (55) with a smaller diameter.

10. Multiway valve according to any of claims 1 to 9, **characterised in that** it has two fluid discharge passages (15d, 15e) controlled by the main valve member (7) and connected or connectable to a pressure sink, wherein one of these fluid discharge passages (15e) also forms the pressure relief passage (47) assigned to the pressure relief valve (46).

11. Multiway valve according to any of claims 1 to 10, **characterised in that** the non-return valve (45) has a non-return valve member (63) biased by spring pre-tension in a closed position, in which it fits up tightly against a sealing face (33).

12. Multiway valve according to claim 11, **characterised in that** at least the non-return valve member (63) of the non-return valve (45) is a component part of the main valve member (7).

13. Multiway valve according to claim 12, **characterised in that** the main valve member (7) has for sealing the first drive chamber (23) a seal ring (32) with a flexible sealing lip (64) in sliding contact with the sealing face (33) fixed to the casing, wherein this sealing lip (64) forms the non-return valve member (63).

14. Multiway valve according to claim 13, **characterised in that** the seal ring (32) has an annular slot (66) bounded on the radial outside by the sealing lip (64), and with its slot opening facing in a direction axially opposite to the first driving face (24).

15. Multiway valve according to any of claims 12 to 14, **characterised in that** the main valve member (7) has a driving piston (22) defining the first driving face (24), which carries the non-return valve member (63) and is expediently mounted on one of the two axial end sections of the main valve member (7), wherein expediently the second drive chamber (26) has two sub-chambers (26a, 26b) spaced axially apart from one another, of which one (26a) is located in the area of the end section of the main valve member (7) axially opposite the driving piston (22), and of which the other (26b) is located on the side of the driving piston (22) axially opposite the first drive chamber (23), wherein the two sub-chambers (26a, 26b) are in fluidic connection with one another through a connecting passage (27) extending expediently inside the main valve member (7).

## Revendications

1. Soupape à plusieurs voies précommandée, avec un organe de soupape principale (7) disposé de manière à pouvoir se déplacer linéairement entre une première position de commutation et une seconde positon de commutation, qui présente des premières et secondes surfaces d'entraînement (24 25) orientées à l'opposé, dont la première surface d'entraînement (24) délimite un premier espace d'entraînement (23) pouvant être alimenté fluidiquement pour la commutation de l'organe de soupape principale (7) dans la seconde position de commutation et la seconde surface d'entraînement (25) délimite un second espace d'entraînement (26) pouvant être alimenté fluidiquement pour la commutation de l'organe de soupape principale (7) dans la première position de commutation, et avec une soupape précommandée (3) pour l'alimentation fluidique ou la décompression alternative du premier espace d'entraînement (23), **caractérisée en ce que** le premier espace d'entraînement (23) est relié au second espace d'entraînement (26) par un clapet antiretour (45) ouvrant en direction du second espace d'entraînement (26) selon la pression et obturant dans le sens contraire, et **en ce que** la soupape à plusieurs voies présente une soupape de décompression (46) actionnable par l'organe de soupape principale (7) en fonction de sa position, qui obture dans la seconde position de commutation de l'organe de soupape principale (7) le second espace d'entraînement (26) par un canal de décompression (47) et qui libère une liaison fluidique entre le second espace d'entraînement (26) et le canal de décompression (47) lorsque l'organe de soupape principale (7) commute de la seconde position de commutation à la première position de commutation ou occupe la première position de commutation.

2. Soupape à plusieurs voies selon la revendication 1, **caractérisée en ce que** la soupape de décompression (46) est réalisée de sorte à libérer la liaison fluidique entre le premier espace d'entraînement (23) et le canal de décompression (47) lors de la commutation de l'organe de soupape principale (7) de la seconde à la première position de commutation à partir de la phase finale d'approche de l'organe de soupape principale (7) de la première position de commutation en continu jusqu'à l'atteinte de la première position de commutation.

3. Soupape à plusieurs voies selon la revendication 1 ou 2, **caractérisée en ce que** l'organe de soupape principale (7) est réalisé comme un tiroir de soupape avec un corps de tiroir (8) oblong, présentant une périphérie extérieure étagée et en particulier en une seule partie.

4. Soupape à plusieurs voies selon l'une quelconque des revendications 1 à 3, **caractérisée en ce que** la soupape de décompression (46) présente une surface étanche (48) fixe par rapport au boîtier de soupape (4) et un organe de commande (52) pouvant se déplacer par rapport à celui-ci par l'organe de soupape principale (7), l'organe de commande (52) étant levé de la surface étanche (48) pour la libération de la liaison fluidique entre le second espace d'entraînement (26) et le canal de décompression (47) et repose pour l'obturation de la liaison fluidique par contact étanche contre la surface étanche (48).

5. Soupape à plusieurs voies selon la revendication 4, **caractérisée en ce que** la surface étanche (48) est une surface annulaire orientée radialement vers l'intérieur, sur laquelle repose l'organe de commande (52) lors de l'occupation d'une position d'obturation obturant la liaison fluidique entre le second espace de travail (26) et le canal de décompression (47) radialement depuis l'intérieur et qui est traversée de manière appropriée coaxialement par l'organe de commande (52).

6. Soupape à plusieurs voies selon la revendication 5, **caractérisée en ce que** la surface étanche annulaire (48) est réalisée sur une bague d'étanchéité (14, 14a) fixée par rapport au boîtier de soupape (4), qui entoure de manière appropriée coaxialement l'organe de commande (52).

7. Soupape à plusieurs voies selon l'une quelconque des revendications 4 à 6, **caractérisée en ce que** l'organe de commande (52) est un élément direct de l'organe de soupape principale (7).

8. Soupape à plusieurs voies selon l'une quelconque des revendications 4 à 7 en liaison avec la revendication 3, **caractérisée en ce que** l'organe de commande (52) de la soupape de décompression (46) est constitué d'une section longitudinale du corps de tiroir (8) de l'organe de soupape principale (7), en particulier de la section d'extrémité, tournée vers le second espace d'entraînement (26), du corps de tiroir (8).

9. Soupape à plusieurs voies selon l'une quelconque des revendications 4 à 8, **caractérisée en ce que** l'organe de commande (52) constitué de préférence d'une section longitudinale de l'organe de soupape principale (7) présente un contour extérieur étagé, dispose d'une section d'obturation (56) réalisée pour l'appui contre la surface étanche (48), d'une section de libération (55) présentant un diamètre plus faible, contigu axialement à celle-ci.

10. Soupape à plusieurs voies selon l'une quelconque des revendications 1 à 9, **caractérisée en ce qu'**elle présente deux canaux d'évacuation de fluide (15d, 15e) reliés ou pouvant être reliés à un puits de pression, commandés par l'organe de soupape principale (7), l'un de ces canaux d'évacuation de fluide (15e) formant aussi le canal de décompression (47) associé à la soupape de décompression (46).

11. Soupape à plusieurs voies selon l'une quelconque des revendications 1 à 10, **caractérisée en ce que** le clapet antiretour (45) présente un organe de clapet antiretour (63) précontraint par précontrainte à ressort dans une position de fermeture, qui repose de manière étanche dans la position de fermeture contre une surface étanche (33).

12. Soupape à plusieurs voies selon la revendication 11, **caractérisée en ce qu'**au moins l'organe de clapet antiretour (63) du clapet antiretour (45) est un élément de l'organe de soupape principale (7).

13. Soupape à plusieurs voies selon la revendication 12, **caractérisée en ce que** l'organe de soupape principale (7) présente pour rendre étanche le premier espace d'entraînement (23) une bague d'étanchéité (32) avec une lèvre d'étanchéité (64) flexible reposant par glissement contre la surface étanche (33) fixée au boîtier, sachant que cette lèvre d'étanchéité (64) formant l'organe de clapet antiretour (63).

14. Soupape à plusieurs voies selon la revendication 13, **caractérisée en ce que** la bague d'étanchéité (32) présente une rainure annulaire (66) délimitée radialement de l'extérieur par la lèvre d'étanchéité (64), dont l'ouverture de rainure est dirigée dans une direction opposée axialement à la première surface d'entraînement (24).

15. Soupape à plusieurs voies selon l'une quelconque des revendications 12 à 14, **caractérisée en ce que** l'organe de soupape principale (7) présente un piston d'entraînement (22) définissant la première surface d'entraînement (24), qui porte l'organe de clapet antiretour (63) et qui est disposé de manière appropriée sur l'une des deux zones d'extrémité axiales de l'organe de soupape principale (7), le second espace d'entraînement (26) présentant de manière appropriée deux espaces partiels (26a, 26b) disposés à distance axialement, dont l'un (26a) est disposé dans la zone de la zone d'extrémité opposée axialement au piston d'entraînement (22) de l'organe de soupape principale (7) et dont l'autre (26b) se trouve sur le côté opposé axialement au premier espace d'entraînement (23) du piston d'entraînement (22), les deux espaces partiels (26a, 26b) étant en liaison fluidique à l'aide d'un canal de liaison (27) s'étendant de manière appropriée à l'intérieur de l'organe de soupape principale (7).
